# EUROPEAN PATENT APPLICATION

(11) **EP 2 953 188 A1**
(43) Date of publication of application: **09.12.2015**
(21) Application number: 15165333.4
(22) Date of filing: 28.04.2015
(51) Int. Cl.: H01M 2/30

(54) **RECHARGEABLE BATTERY**

(30) Priority: 02.06.2014 KR 20140067243
(71) Applicant: Samsung SDI Co., Ltd., Yongin-si, Gyeonggi-do (KR)
(72) Inventor: Byun, Sang-Won, Yongin-si, Gyeonggi-do (KR); Lee, Chi-Young, Yongin-si, Gyeonggi-do (KR); Lee, Kwan-Hyung, Yongin-si, Gyeonggi-do (KR)
(74) Representative: Gulde & Partner

(57) **Abstract**

A rechargeable battery includes an electrode assembly including a first electrode and a second electrode, electrode terminals electrically coupled to the electrode assembly, a case for accommodating the electrode assembly, and a cap plate installed at an opening of the case to seal the case, the cap plate including terminal holes. Each of the electrode terminals includes a rivet terminal at a terminal hole of the cap plate, the rivet terminal being electrically coupled to the electrode assembly, a plate terminal outside of the cap plate, the plate terminal being electrically coupled to the rivet terminal, and a lead terminal that is elongated toward a lateral side of the plate terminal.

## Description

### BACKGROUND

### 1. Field

Embodiments relate to a rechargeable battery.

### 2. Description of the Related Art

Rechargeable batteries differ from primary batteries in that they can be repeatedly charged and discharged, while the latter are incapable of being recharged.

Low-capacity rechargeable batteries are used in small portable electronic devices such as mobile phones, notebook computers, and camcorders, while high-capacity rechargeable batteries are widely used as a power source for driving a motor of a hybrid vehicle.

As typical rechargeable batteries, there are a nickel-cadmium (Ni-Cd) battery, a nickel-hydrogen (Ni-MH) battery, a lithium (Li) battery, a lithium ion (Li-ion) rechargeable battery, etc.

Particularly, the lithium ion rechargeable battery has an operating voltage about three times as high as that of the Ni-Cd battery or Ni-MH battery that is widely used as a power supply for electronic devices.

In addition, the lithium ion rechargeable battery has been widely used because its energy density per unit weight is high.

In the rechargeable battery, a lithium-based oxide has been used as a positive active material, and a carbon material has been used as a negative active material.

Generally, batteries are classified into a liquid electrolyte battery and a polymer electrolyte battery depending on the type of electrolytes, and lithium batteries using a liquid electrolyte are called lithium ion batteries while batteries using a polymer electrolyte are called lithium polymer batteries.

### SUMMARY

Embodiments are directed to a rechargeable battery including an electrode assembly including a first electrode and a second electrode, electrode terminals electrically coupled to the electrode assembly, a case for accommodating the electrode assembly, and a cap plate installed at an opening of the case to seal the case, the cap plate including terminal holes terminal holes. Each of the electrode terminals includes a rivet terminal at a terminal hole of the cap plate, the rivet terminal being electrically coupled to the electrode assembly, a plate terminal outside of the cap plate, the plate terminal being electrically coupled to the rivet terminal, and a lead terminal that is elongated toward a lateral side of the plate terminal.

The plate terminal and the lead terminal may be integrally formed.

The lead terminal may include groove-like notches at a connecting portion to which the plate terminal is coupled.

The notches may be at opposite edges of the lead terminal.

The lead terminal may be made of material that is elastically deformable.

The lead terminal may include an aluminum material.

The notches may be in a form of polygonal grooves that are inwardly indented from edges of the lead terminal.

The notches may be in a form of triangular grooves that are inwardly indented from edges of the lead terminal.

At least two notches may be respectively located at opposite edges of the connecting portion that is coupled to the plate terminal.

The plate terminal and the lead terminal may have a same thickness and may be coplanar.

The rechargeable battery may further include bus bars electrically coupled to the lead plate.

### BRIEF DESCRIPTION OF THE DRAWINGS

Features will become apparent to those of skill in the art by describing in detail exemplary embodiments with reference to the attached drawings in which:
FIG. 1 illustrates a schematic perspective view of a rechargeable battery according to an exemplary embodiment.
FIG. 2 illustrates a drawing of FIG. 1 taken along the line II-II.
FIG. 3 illustrates a top plan view of electrode terminals of FIG. 1 to which bus bars are coupled.
FIG. 4 illustrates a schematic perspective view of the electrode terminal of FIG. 1 formed with polygonal groove-like notches.
FIG. 5 illustrates a schematic perspective view of the electrode terminal of FIG. 1 formed with triangular groove-like notches.
FIG. 6 illustrates a schematic perspective view of electrode terminals according to another exemplary embodiment formed with notches.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions may be exaggerated for clarity of illustration. Like reference numerals refer to like elements throughout.

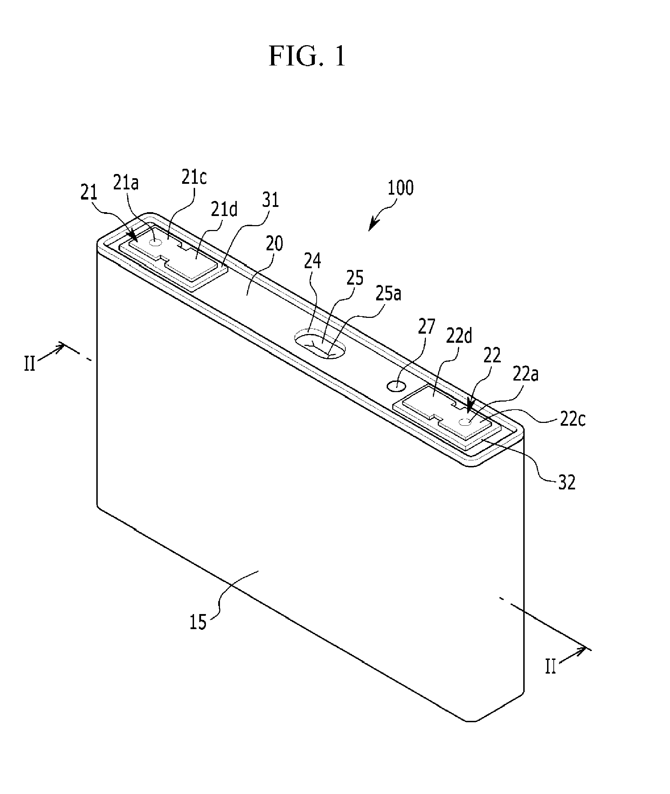

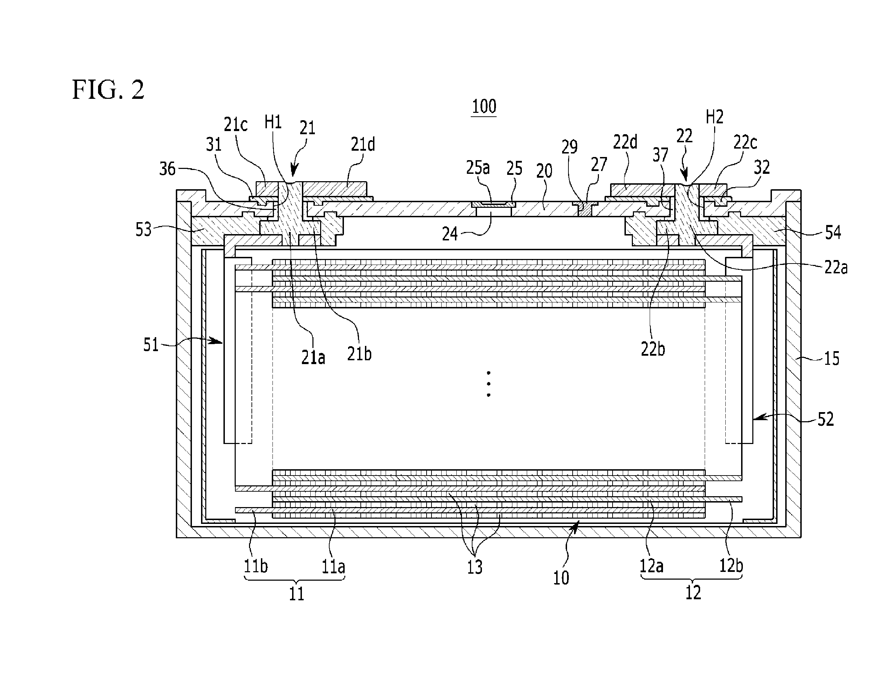

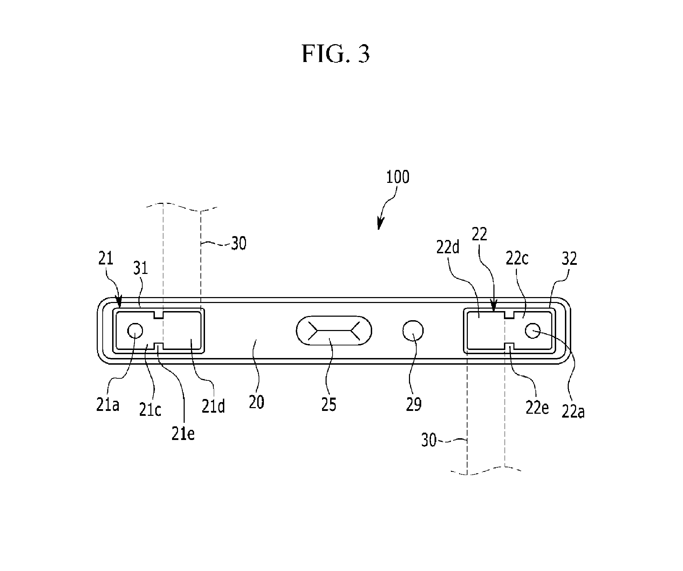

FIG. 1 illustrates a schematic perspective view of a rechargeable battery according to an exemplary embodiment, FIG. 2 illustrates a drawing of FIG. 1 taken along the line II-II, and FIG. 3 illustrates a top plan view of electrode terminals of FIG. 1 to which bus bars are coupled.

As shown in FIGS. 1 to 3, a rechargeable battery 100 according to an exemplary embodiment may includes an electrode assembly 10 for performing charging and discharging operations, electrode terminals 21 and 22 electrically coupled to the electrode assembly 10 and including a first electrode terminal 21 and a second electrode terminal 22, a case 15 for accommodating the electrode assembly 10, and a cap plate 20 installed at an opening of the case 15 to seal the case 15 and formed with terminal holes H1 and H2.

For example, a first electrode 11 (hereinafter referred to as a negative electrode) and a second electrode 12 (hereinafter referred to as a positive electrode) may be disposed at opposite sides of a separator 13, which is an insulator, and the positive electrode 12, the negative electrode 11, and the separator 13 may be spirally wound in a jelly-roll state to form the electrode assembly 10.

The positive and negative electrodes 11 and 12 may respectively include coated regions 11a and 12a where an active material is coated on current collectors made of a metal plate, and uncoated regions 11b and 12b where an active material is not coated thereon and which are formed as exposed current collectors.

The uncoated region 11b of the negative electrode 11 may be formed at one end of the negative electrode 11 along the wound negative electrode 11. The uncoated region 12b of the positive electrode 12 may be formed at one end of the positive electrode 12 along the wound positive electrode 12. Thus, the uncoated regions 11b and 12b are respectively disposed at opposite ends of the electrode assembly 10.

The case 15 may be substantially formed as, for example, a cuboid in which a space for accommodating the electrode assembly 10 and an electrolyte solution is provided

The case 15 may be formed with an opening that connects inner and outer spaces. The opening allows the electrode assembly 10 to be inserted into the case 15. The cap plate 20 may be installed at the opening of the case 15 to seal the case 15.

The case 15 and the cap plate 20 may be formed of, for example, aluminum, such that the case 15 and the cap plate 20 may be welded to each other.

In addition, the cap plate 20 may be provided with an electrolyte injection opening 29, a vent hole 24, and terminals H1 and H2.

After the cap plate 20 is combined with the case 15, allows the electrolyte solution may be injected into the case 15 through the electrolyte injection opening 29. After the electrolyte solution is injected into the case 15, the electrolyte injection opening 29 may be sealed with a sealing cap 27.

The vent hole 24 may be sealed with a vent plate 25 so as to discharge internal pressure of the rechargeable battery 100. The vent plate 25 may be rupturable to open the vent hole 24 when the internal pressure of the rechargeable battery 100 reaches a predetermined pressure. The vent plate 25 may be provided with a notch groove 25a that induces the rupture.

The electrode terminals 21 and 22, made up of a negative electrode terminal 21 and a positive electrode terminal 22, may be installed at the terminal holes H1 and H2 of the cap plate 20 and may be electrically coupled to the electrode assembly 10. The negative electrode terminal 21 may be electrically coupled to the negative electrode 11 of the electrode assembly 10, and the positive electrode terminal 22 may be electrically coupled to the positive electrode 12 of the electrode assembly 10. Thus, the electrode assembly 10 may be drawn out of the case 15 through the negative and positive electrode terminals 21 and 22.

The electrode terminals 21 and 22 include may include rivet terminals 21a and 22a that are installed at the terminal holes H1 and H2 of the cap plate 20 to be electrically coupled to the electrode assembly 10, flanges 21b and 22b that are integrally and widely formed with the rivet terminals 21a and 22a inside of the cap plate 20, and lead terminals 21d and 22d disposed outside of the cap plate 20 to extend toward lateral sides of plate terminals 21c and 22c that are respectively electrically coupled to the rivet terminals 21a and 22a.

The lead terminals 21d and 22d may be integrally formed to be elongated toward the lateral sides of the plate terminals 21c and 22c that form the electrode terminals 21 and 22. The lead terminals 21d and 22d may be formed of aluminum or the like, and may be formed of the same material as the plate terminals 21c and 22c.

Bus bars 30 may be electrically coupled to the lead terminals 21d and 22d.

The lead terminals 21d and 22d and the bus bars 30 are exemplarily described as being electrically coupled to each other by welding and the like. In other implementations, the bus bars 30 may be coupled through predetermined fasteners (not shown), such as bolts or the like.

When the lead terminals 21d and 22d are formed to be elongated toward the lateral sides of the plate terminal 21c and 22c, a stable coupling state of the lead terminals 21d and 22d and the bus bars 30 may be maintained, even if the rechargeable battery 100 swells to be deformed due to continuous use. The lead terminals 21d and 22d may be formed of a flexible material such as aluminum or the like, and accordingly, may be partially deformable.

When the rechargeable battery 100 is deformed, the connecting portions of the lead terminals 21d and 22d and the bus bars 30 may be elastically deformed in either one or the other direction with respect to positions of the plate terminals 21c and 22c, such that the bus bars 30 are not damaged at decoupling or coupling positions from the lead terminals 21d and 22d, thereby maintaining a stable coupling state.

In the present exemplary embodiment, notches 21e and 22e may be formed at the lead terminals 21d and 22d so as to improve flexibility. The notches 21e and 22e may be respectively formed at opposite lateral edges of the lead terminals 21d and 22d.

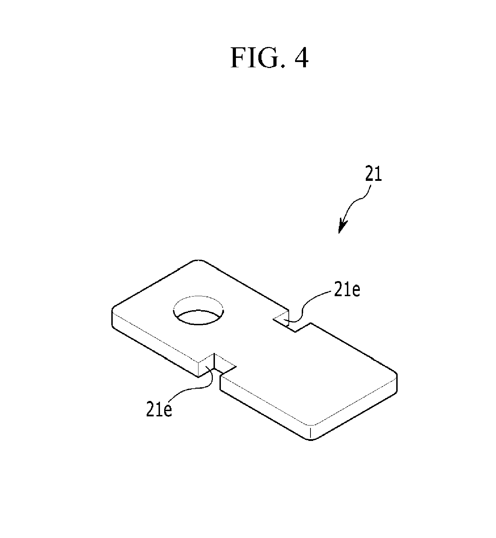

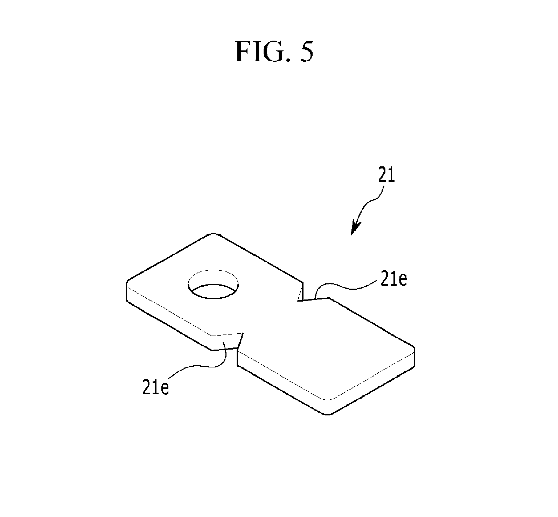

FIG. 4 illustrates a schematic perspective view of the electrode terminal of FIG. 1 formed with polygonal groove-like notches, and FIG. 5 illustrates a schematic perspective view of the electrode terminal of FIG. 1 formed with triangular groove-like notches.

As shown in FIGS. 4 and 5, the notches 21e and 22e may be formed in a polygonal groove-like shape that is inwardly indented in a form of a groove from the opposite edges of the lead terminals 21d and 22d. The lead terminals 21d and 22d may be easily elastically deformable in either one or the other direction based on the positions where the notches 21e and 22e are formed, such that a stable coupling state of the lead terminals 21d and 22d and the bus bars 30 may be maintained even if the rechargeable battery 100 is deformed.

The notches 21e and 22e are exemplarily described to have a polygonal groove-like shape, as shown in FIG. 4. In other implementations, the notches 21e and 22e may be formed in a triangular groove-like shape, as shown in FIG. 5.

The notches 21e and 22e may be formed such that their widths decrease at the connecting portions where the lead terminals 21d and 22d and the plate terminals 21c and 22c are coupled to each other, and may have an appropriate groove-like shape.

The electrode terminals 21 and 22 may be formed to have the same thickness such that the lead terminals 21d and 22d and the plate terminals 21c and 22c are formed in same plane. While the connecting state of the lead terminals 21d and 22d and the plate terminals 21c and 22c is stably maintained, elastic deformation may be easily achieved based on regions around notches 21e and 22e.

Negative and positive electrode gaskets 36 and 37 may be respectively installed between the rivet terminals 21a and 22a of the negative and positive terminals 21 and 22 and inner sides of the terminal holes H1 and H2 of the cap plate 20 so as to seal and electrically insulate between the rivet terminals 21a and 22a of the negative and positive terminals 21 and 22 and the cap plate 20. The negative and positive electrode gaskets 36 and 37 may be installed to be elongated between the flanges 21b and 22b and the inner side of the cap plate 20, thereby further sealing and electrically insulating between the flanges 21b and 22b and the cap plate 20. The negative and positive electrode gaskets 36 and 37 may prevent the electrolyte solution from leaking through the terminal holes H1 and H2 by sealing the negative and positive terminals 21 and 22 at the cap plate 20.

Negative and positive current collecting tabs 51 and 52 may respectively electrically couple the negative and positive terminals 21 and 22 to the negative and positive electrodes 11 and 12 of the electrode assembly 10. The negative and positive current collecting tabs 51 and 52 may be combined to lower ends of the rivet terminal 21a and 22a to caulk the lower end thereof, such that the negative and positive current collecting tabs 51 and 52 are coupled to the lower ends of the rivet terminals 21a and 22a while being supported by the flanges 21b and 22b.

Lower insulating members 53 and 54 may be respectively installed between the negative and positive current collecting tabs 51 and 52 and the cap plate 20 to electrically insulate the negative and positive current collecting tabs 51 and 52 from the cap plate 20. The lower insulating members 53 and 54 may respectively have one side combined to the cap plate 20 while the other side encloses the negative and positive current collecting tabs 51 and 52, the rivet terminals 21a and 22a, and the flanges 21b and 22b, thereby stabilizing a connecting structure therebetween.

An upper insulating member 31 adjacent to the negative electrode terminal 21 may be installed between the plate terminal 21c and the cap plate 20 to electrically insulate the plate terminal 21c from the cap plate 20. The cap plate 20 and the negative electrode terminal 21 may maintain an electrically insulated state therebetween.

For example, the upper insulating member 31 may be interposed between the plate terminal 21c and the cap plate 20 and is penetrated by the rivet terminal 21a. The upper insulating member 31 and the plate terminal 21c may be combined to an upper end of the rivet terminal 21a to caulk the upper end thereof, such that upper insulating member 31 and the plate terminal 21c are combined to the upper end of the rivet terminal 21a.

The negative electrode gasket 36 may be installed such that it is further elongated between the rivet terminal 21a and the upper insulating member 31. The negative electrode gasket 36 may further strengthen the sealing and electrical insulation between the rivet terminal 21a and the upper insulating member 31.

A top plate 32 adjacent to the positive electrode terminal 22 may be formed of a conductive member. The top plate 32 may be installed between the plate terminal 22c and the cap plate 20 so as to electrically couple the plate terminal 22c and the cap plate 20. The cap plate 20 may maintain an electrically coupled state with the electrode assembly 10 through the positive electrode terminal 22.

For example, the top plate 32 may be interposed between the plate terminal 22c and the cap plate 20 and may be penetrated by the rivet terminal 22a. The top plate 32 and the plate terminal 22c may be combined to an upper end of the rivet terminal 22a by caulking.

The positive electrode gasket 37 may be installed such that it is further elongated between the rivet terminal 22a and the top plate 32. The positive electrode gasket 37 may prevent the rivet terminal 22a and the top plate 32 from being directly electrically coupled to each other. The rivet terminal 22a may be electrically coupled to the top plate 32 through the plate terminal 22c and to the cap plate 20 through the top plate 32.

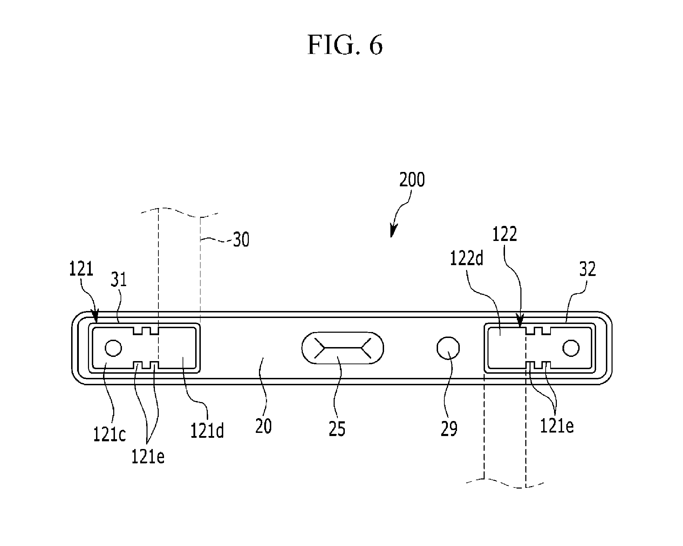

FIG. 6 illustrates a schematic perspective view of electrode terminals formed with notches according to another exemplary embodiment. The same reference numerals as those in FIGS. 1 to 5 refer to the same members having the same functions. A detailed description of the same reference numerals will not be repeated.

As shown in FIG. 6, a rechargeable battery 200 according to this exemplary embodiment may include electrode terminals 121 and 122 in which at least two notches 121e are respectively formed at opposite edges of plate terminals 121c and 122c.

As such, when at least two of the notches are formed at the opposite edges between the electrode terminals 121 and 122 and lead terminals 121d and 122d of the plate terminals 121c and 122c, flexibility may be further improved to further enhance a deformation degree of freedom even if the rechargeable battery is deformed, thereby allowing the electrode terminals 121 and 122 and the bus bar 30 to be stably coupled.

Here, the notches may have shape shown in Fig. 4 or 5.

By way of summation and review, lithium ion rechargeable batteries may partially swell during continuous use thereof, thereby increasing a risk that connecting portions of bus bars coupled to electrode terminals may be broken.

Embodiments provide a rechargeable battery in which rupture at portions of electrode terminals that are coupled to bus bars may be avoided.

Accordingly to embodiments, the electrode terminal may be movable by a fixed displacement such that no rupture occurs at the portions where the electrode terminals and the bus bars are coupled even if the rechargeable battery is partially deformed, thereby improving safety of the rechargeable battery.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope thereof as set forth in the following claims.

## Claims

1. A rechargeable battery (100), comprising:
an electrode assembly (10) including a first electrode (11) and a second electrode (12);
electrode terminals (21, 22) electrically coupled to the electrode assembly (10);
a case (15) for accommodating the electrode assembly (10); and
a cap plate (20) installed at an opening of the case (15) to seal the case (15), the cap plate (20) including terminal holes (H1, H2), wherein each of the electrode terminals (21, 22) includes:
a rivet terminal (21a, 22a) at a terminal hole (H1, H2) of the cap plate (20), the rivet terminal (21a, 22a) being electrically coupled to the electrode assembly (10),
a plate terminal (21c, 22c) outside of the cap plate (20), the plate terminal (21c, 22c) being electrically coupled to the rivet terminal (21a, 22a), and
a lead terminal (21d, 22d) that is elongated toward a lateral side of the plate terminal (21c, 22c).

2. The rechargeable battery as claimed in claim 1, wherein the plate terminal (21c, 22c) and the lead terminal (21d, 22d) are integrally formed.

3. The rechargeable battery as claimed in claim 1 or 2, wherein the lead terminal (21d, 22d) includes groove-like notches (21e, 22e) at a connecting portion to which the plate terminal (21c, 22c) is coupled.

4. The rechargeable battery as claimed in claim 3, wherein the notches (21e, 22e) are at opposite edges of the lead terminal (21 d, 22d).

5. The rechargeable battery as claimed in any one of the preceding claims, wherein the lead terminal (21d, 22d) is made of material that is elastically deformable.

6. The rechargeable battery as claimed in any one of the preceding claims, wherein the lead terminal (21d, 22d) includes an aluminum material.

7. The rechargeable battery as claimed in any one of claims 3 to 6, wherein the notches (21e, 22e) are in a form of polygonal grooves that are inwardly indented from edges of the lead terminal (21d, 22d).

8. The rechargeable battery as claimed in any one of claims 3 to 6, wherein the notches (21e, 22e) are in a form of triangular grooves that are inwardly indented from edges of the lead terminal (21d, 22d).

9. The rechargeable battery as claimed in any of claims 3 to 8, wherein at least two notches (21e, 22e) are respectively located at opposite edges of the connecting portion that is coupled to the plate terminal (21c, 22c).

10. The rechargeable battery as claimed in any one of preceding claims ,
wherein the plate terminal (21c, 22c) and the lead terminal (21d, 22d) have a same thickness and are coplanar.

11. The rechargeable battery as claimed in any one of preceding claims, further comprising bus bars (30) electrically coupled to the lead terminals (21d, 22d).
